# EUROPEAN PATENT SPECIFICATION

(11) **EP 1 688 342 B1**
(45) Date of publication and mention of the grant of the patent: **10.04.2013**
(21) Application number: 06002380.1
(22) Date of filing: 06.02.2006
(51) Int. Cl.: B62J 17/00, B62J 17/02

(54) **Vehicle**
Fahrzeug
Véhicule

(30) Priority: 04.02.2005 JP 2005029816
(43) Date of publication of application: 09.08.2006
(73) Proprietor: Yamaha Hatsudoki Kabushiki Kaisha, Iwata-shi, Shizuoka-ken (JP)
(72) Inventor: Takeshita, Hirotoshi, Iwata-shi, Shizuoka-ken (JP)
(74) Representative: Grünecker, Kinkeldey, Stockmair & Schwanhäusser

(56) References cited:
- EP-A- 0 462 511
- US-A- 4 709 774
- US-A- 4 911 494

## Description

The present invention relates to a motorcycle according to the preamble portion of claim 1, provided with a radiator ahead of an engine, and adapted to discharge the wind passed through the radiator from wind discharge ports provided in side walls of a front cowl to the outside of a vehicle.

In many of sports type motorcycles, an engine is disposed in a longitudinally central portion of a vehicle body, a radiator ahead of the engine, a front cowl on a front portion of the vehicle body so as to cover a front surface of the vehicle body to side surfaces thereof, and a wind discharge ports, which are adapted to discharge the wind passed through the radiator, in side walls of the front cowl (refer to JP-UM-B-5-9995, JP-UM-B-4-50228, and JP-A-62-283082), and US 4,911,494, which discloses the features of the preamble of claim 1.

The travel wind passing through a radiator while a motorcycle travels enters an opening in the center of a front wall of a front cowl and passes through the radiator, and a part of the wind flows out from wind discharge ports in side walls of the front cowl to the outside of the vehicle, the wind flowing rearward as the wind is carried on the travel wind flowing along side surfaces of the front cowl. The wind coming out from the wind discharge ports is only carried on the wind flowing along the surface of the front cowl, so that a great discharge effect could not be expected.

In view of these circumstances, the present invention aims at providing a motorcycle capable of positively improving the discharge efficiency of the wind passed through a radiator to the outside of a vehicle body.

This objective is solved in an inventive manner by a motorcycle according to claim 1.

Preferably, the vehicle further comprises a body frame, wherein the engine is supported on the body frame, the radiator is provided ahead of the engine, the front cowl is provided so as to cover a front surface of the body frame and side regions of a front portion of the body frame including the radiator and the discharge ports being formed in the side walls of the front cowl, are opened in the portion of side walls of the front cowl, which are behind the radiator and adapted to discharge travel wind passed through the radiator, wherein side walls of a front end of the portions of the front cowl, which are arranged above the discharge ports for the travel wind passed through the radiator are provided with the vent passages for introducing the travel wind from the front end and for making the travel wind flow rearward.

Further, preferably the vent passages are provided with extensions made longer longitudinally up to positions immediately above the discharge ports for discharging the travel wind passed through the radiator. Therein, it is further preferably if an upper-cowl is fixed to the body frame, the extensions of the vent passages being formed on the upper-cowl.

Still further, preferably induction passages for inducing the travel wind, which rearwardly flows from the vent passages, in the outward direction are provided in rear end regions of the extensions of the vent passages. Therein, it is further preferable if the induction passages are inclined in the rearward downward direction.

Yet further, preferably the upper-cowl is provided with recesses extending inward in the direction of the width of the body frame, the vent passages being formed between the recesses and a panel-type middle-cowl fixed to the upper-cowl so that the middle-cowl covers the outer side of the upper cowl. Therein, it is further preferable if the middle-cowl extends in the longitudinal direction so as to vertically divide the discharge ports for the travel wind passed through the radiator, the discharge ports being formed above the middle-cowl and including lower wind discharge ports formed above the middle-cowls and adapted to discharge the travel wind passed through an upper portion of the radiator, and lower wind discharge ports formed below the middle-cowl and adapted to discharge the travel wind passed through a lower portion of the radiator. Also, it is still further preferable if an under-cowl is provided, which is fixed to the body frame and is adapted to cover the engine from a lower portion thereof to side portions thereof, the middle-cowl being fixed between the upper-cowl and under-cowl, the wind discharge ports at the upper side of the middle-cowl being used as upper air discharge ports, and the wind discharge ports at the lower side of the middle-cowl being used as lower air discharge ports.

Still further, beneficially there is provided a headlamp on a front portion of the front cowl, the travel wind passages being provided between the headlamp and the radiator.

In the following, the present invention is explained in greater detail with respect to several embodiments thereof in conjunction with the accompanying drawings, wherein:
- Fig. 1: is a left side view showing the construction of the motorcycle as a whole in an embodiment,
- Fig. 2: is a right side view showing the construction of the same motorcycle as a whole,
- Fig. 3: is a front view of an upper portion of the same motorcycle,
- Fig. 4: is a drawing showing the same motorcycle taken from a diagonally front side thereof,
- Fig. 5: is a drawing of an important portion of the same motorcycle taken from a diagonally rear side thereof,
- Fig. 6: is a front view of a front cowl of the same motorcycle,
- Fig. 7: is a side view of a front cowl of the same motorcycle,
- Fig. 8: is a side view showing an upper portion of the same front cowl of the same motorcycle on an enlarged scale,
- Fig. 9: is a sectional view taken along the line IX-IX with arrows in Fig. 8,
- Fig. 10: is a front view of an under-cowl alone constituting a front cowl lower of the same motorcycle,
- Fig. 11: is a side view of the same under-cowl,
- Fig. 12: is a side view of an upper cowl constituting the same front cowl lower, and
- Fig. 13: is a side view of a middle cowl constituting the same front cowl.

### Within the drawings, reference numeral

- 3: is the engine,
- 4: is the radiator,
- 20: is the body frame,
- 50: is the front cowl,
- 54: is the headlamp,
- 62: is the upper cowl,
- 62d: are the recesses,
- 63: are the middle cowls (panel type members),
- 71: is the lower wind discharge port,
- 72: is the upper wind discharge port,
- 73: are the vent passages,
- 73E: are the extensions, and
- 73F: are the induction passages.

Embodiments will now be described on the basis of the drawings.

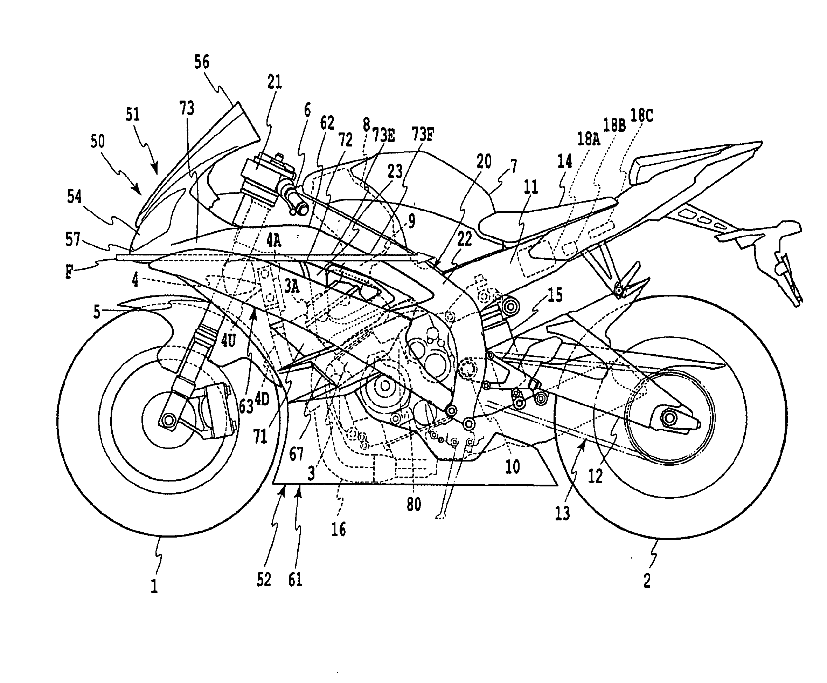

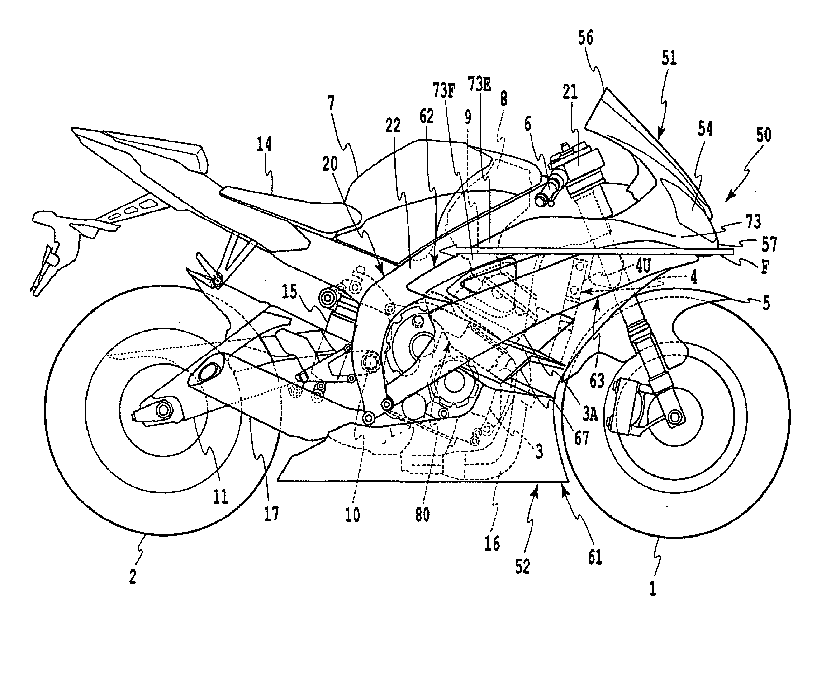

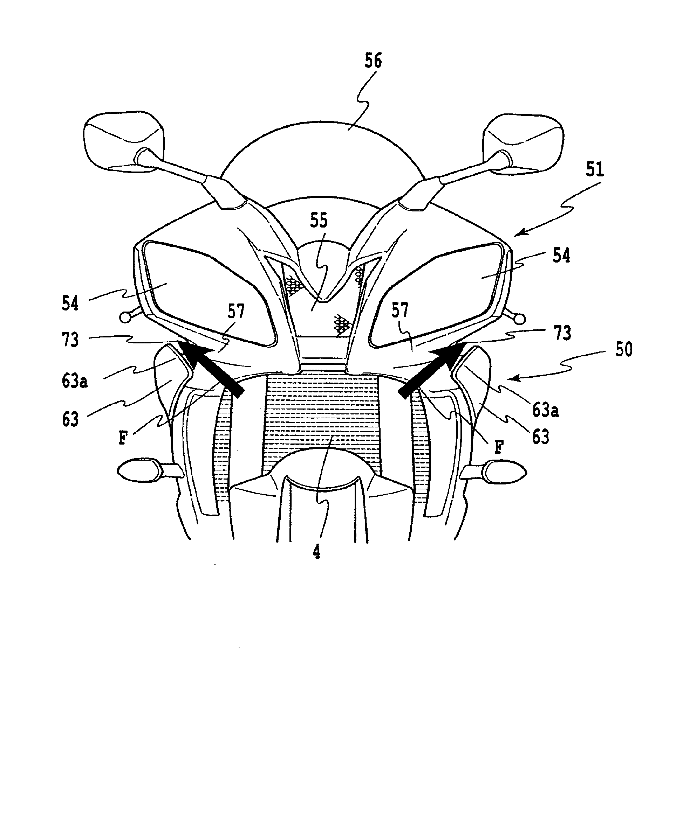

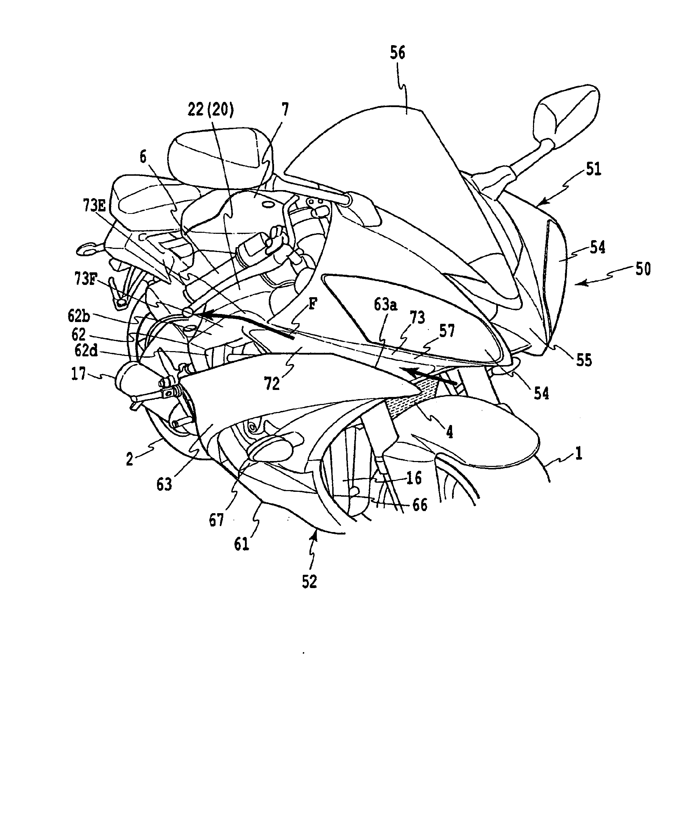

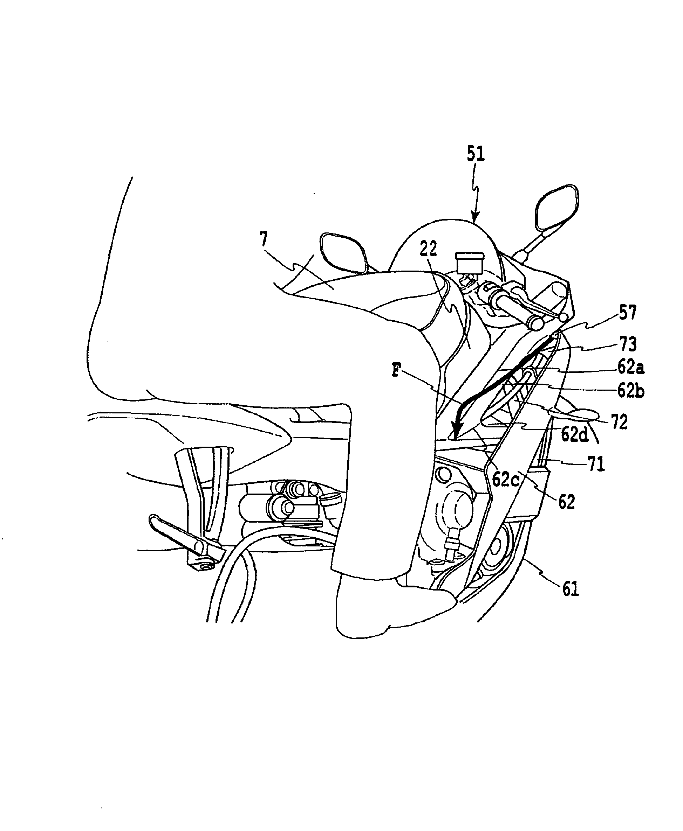

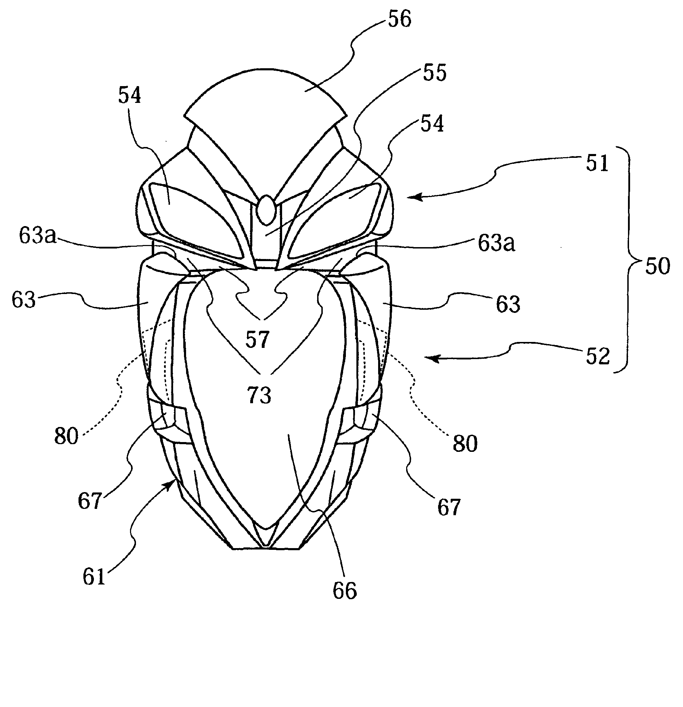

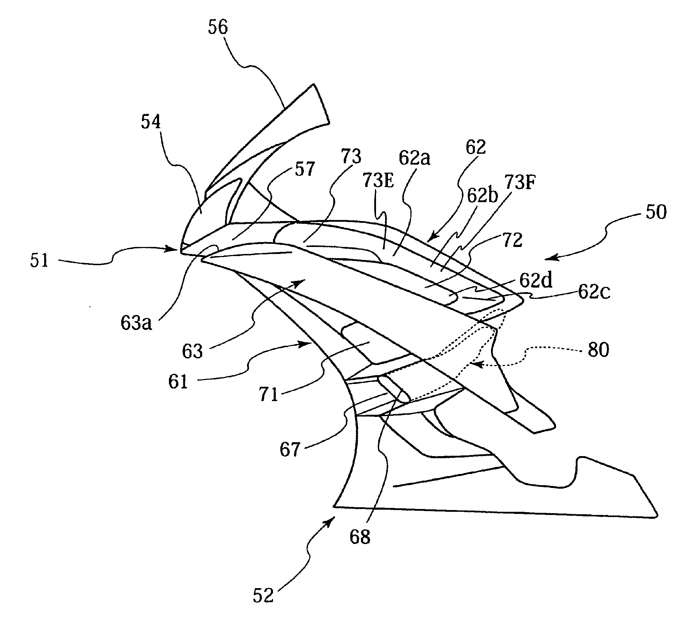

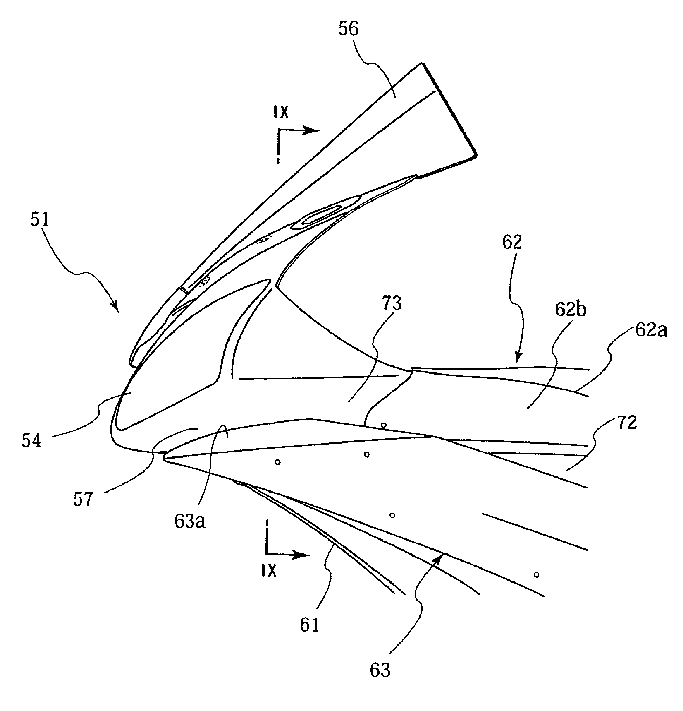

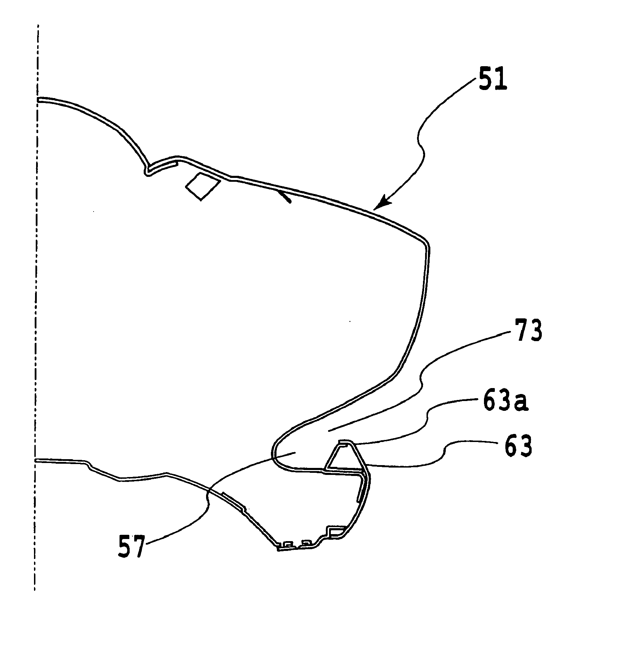

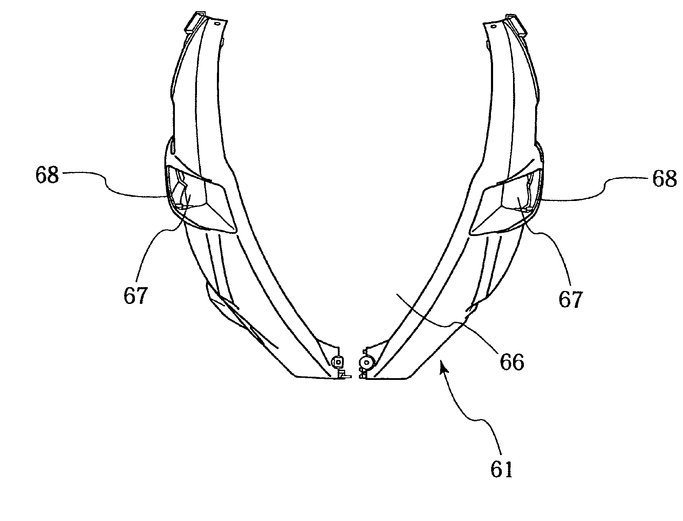

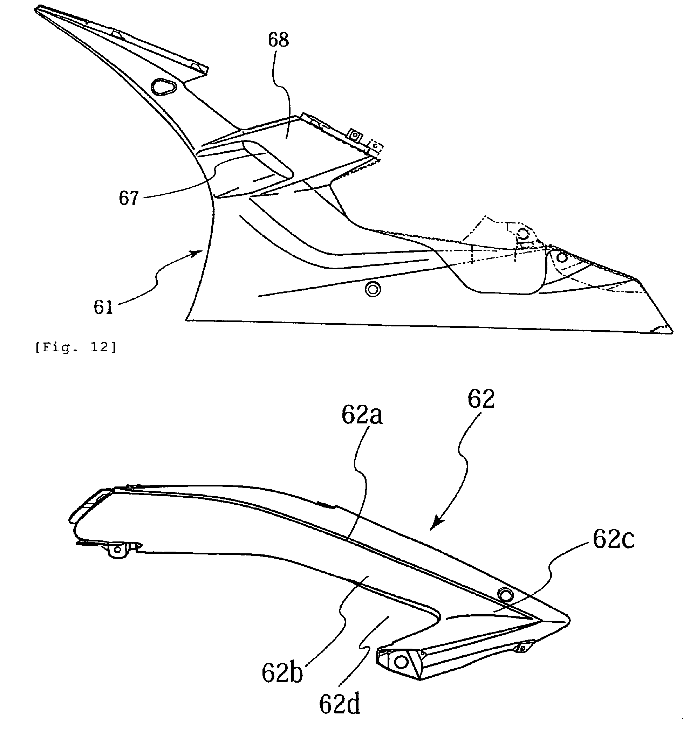

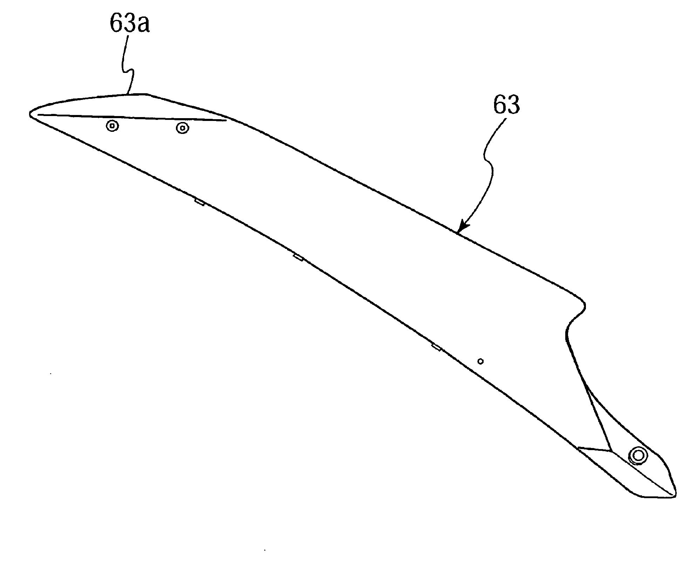

Fig. 1 is a left side view showing the construction of the motorcycle as a whole in an embodiment, Fig. 2 a right side view showing the construction of the same, Fig. 3 a front view of an upper portion of the same motorcycle, Fig. 4 a drawing showing the same motorcycle viewed from a diagonally front side thereof, Fig. 5 a drawing showing an important portion of the same motorcycle viewed from a diagonally rear side thereof, Fig. 6 a front view of a front cowl, Fig. 7 a side view of the same front cowl, Fig. 8 an enlarged side view showing an upper portion of the same front cowl, Fig. 9 a half sectional view taken along the arrow-carrying line IX-IX in Fig. 8, Fig. 10 a front view of an under-cowl alone constituting a front cowl lower, Fig. 11 a side view of the same, Fig. 12 a side view of an upper-cowl constituting the front cowl lower, and Fig. 13 a side view of a middle cowl constituting the front cowl lower.

As shown in Fig. 1 and Fig. 2, this motorcycle is formed by being provided with a body frame 20, a front wheel 2, a rear wheel 2, an engine 3, a radiator 4, a front fork 5, a handlebar 6, a fuel tank 7, an air cleaner 8, a fuel injection system 9, a pivot 10, a rear frame 11, a swing arm 12, a power transmission 13, a seat 14, a rear suspension 15, an exhaust pipe 16, a muffler 17, a front cowl 50 and the like.

The body frame 20 has left and right main frames extending from a head pipe 21 at a front end in the diagonally downward and rearward direction. To the upper side of the rear portions of the main frames 22, rear frames 11 are connected, and, to the lower side of the rear portions of the main frames, swing arms 12 are connected so that the swing arms can be turned vertically via a pivot 10. On rear ends of the swing arms 12, a rear wheel 2 is supported, and, between the swing arms 12 and rear frames 11, rear suspensions 15 are provided.

On the head pipe 21 at a front end of the body frame 20, a handlebar 6 is pivotably supported, and, to the lower side of the handlebar 6, the front forks 5 maneuvered by the handlebar 6 are connected, the front wheel 1 being suspended from lower ends of the front forks 5.

The engine 3 is provided in a longitudinally central portion, and suspended from an engine suspension frame 23 provided on the lower side of and made integral with the main frame 22 of the body frame 20. This engine is a parallel 4-cylinder engine, and mounted in a transversely laid state, a cylinder 3A above a crank case being slightly inclined. Since the engine 3 is thus mounted, the engine 3 takes a position below the position between the left and right main frames. The four exhaust pipes 16 are joined to exhaust port on the front side of the vehicle body of the cylinder 3A, and thereafter the exhaust pipes pass the underside of the engine 3 while the meeting of the same pipes is done repeatedly midway through the extension of the same pipes, the exhaust pipes being finally connected to the muffler 17.

The radiator 4 is disposed in a position of the height substantially equal to that of the cylinder 3A provided ahead of the engine 3 with a wind passing surface facing in the forward direction. A fan 4A is provided on the rear side of the radiator 4. The air cleaner 8 and fuel injection system 9 are provided above the engine 3, and, on the rear side thereof, the fuel tank 7 is provided above the main frame 22. On the rear side of the fuel tank 7, the seat 14 on which a rider is to sit is placed on the rear frame 11. On the portion of the rear frame 11 which is below the seat 14, electrical equipment, such as a battery 18A, a relay 18B, and ECU (engine control unit) 18C is arranged. The power transmission system 13 is provided at the left side of the rear portion of the vehicle body, and the muffler 17 at the right side of the rear portion of the vehicle body.

The front cowl 50 will now be described in detail with reference to mainly Fig. 6 to Fig. 13.

The front cowl 50 is provided in the range from an instrument panel provided ahead of the handlebar 6 to a position in which both the left and right sides of the engine 3 and exhaust pipe 16 are covered thereby. The front cowl 50 is formed by a combination of a front cowl upper 51 and a front cowl lower 52 both of which are made of a reinforced plastic material.

The front cowl upper 51 is so large as to cover the parts in the vicinity of the portion of the vehicle which is ahead of the handlebar 6, and the front cowl lower 52 is so large as to cover the range from a lower edge portion of the front cowl upper 51 to the side portions of the engine 3. As shown in Fig. 6, the front cowl 50 is provided at a central portion of a front wall thereof with a central port 66 from which the travel wind toward the radiator 4 is taken in, and the radiator 4 is positioned at the rear side of this central port 66.

Left and right headlamps 54 are fitted in the front cowl upper 51 which is streamlined as a whole, and an air suction port 55 for sucking the air into the air cleaner 8 is provided between the left and right headlamps 54. A windscreen 56 of a transparent resin extending in the diagonally upward rearward direction so as to cover the instrument panel from the front side thereof is fitted in a central upper portion of the front cowl upper. In both side surfaces of the portion of the front cowl upper which is lower than the headlamps 54 and higher than the position in which the radiator 4 is fixed, recesses 57 extending from the front side to the rear side are provided along the longitudinal curves of the two side surfaces.

The front cowl lower 52 in front elevation has the central port 66, and includes an under-cowl 61 (refer to Fig. 10 and Fig. 11) so large as to cover both sides of the radiator 4 and exhaust pipe 16, a hooked upper-cowl 62 (refer to Fig. 12) provided in a spaced manner with respect to the under-cowl 61, extending along the main frame 22, and connected at a front end to the front cowl upper 51 in one body, and knife-shaped panel type middle cowls 63 (refer to Fig. 13) provided between the under-cowl 61 and upper-cowl 62. A space between the under-cowl 61 and upper-cowl 62 with the middle-cowls 63 removed is set so large as to open the greater parts of the side surfaces of the engine 3 and a part of each of the side surfaces of the radiator 4.

The middle-cowls 63 have sizes not so large as to cover the opened portion as a whole opened between the under-cowl 61 and upper-cowl 62. The middle-cowls 63 extend longitudinally so as to vertically divide the wind discharge port for the wind passed through the radiator. Between the middle-cowls 63 and under-cowl 61, a lower wind discharge port 71 for discharging the wind passed through the radiator 4 is formed, and, between the middle-cowls 63 and upper-cowl 62, an upper wind discharge port 72 for discharging the wind passed through the radiator 4 is formed. The upper wind discharge port 72 is a discharge port mainly for the wind passed through an upper portion 4U of the radiator 4, and the lower wind discharge port 71 is a discharge port mainly for the wind passed through a lower portion 4D of the radiator 4.

As shown in Fig. 12, the upper-cowl 62 bent in the shape of a hook in side elevation is cross-sectionally mountain-shaped, and a highest ridge portion 62a and an inner inclined surface 62b is made of a path bent in the shape of a hook in side elevation. Therefore, the bent portion of the inclined surface 62b having an apex of the ridge portion 62a constitutes a valley-shaped terminal wall 62c. This terminal wall 62c is a part positioned on the side of the rear end when the terminal wall 62c is fixed to the vehicle body, and this position is ahead of a position below which the foot of a driver sitting on the seat is placed (refer to Fig. 5). Since the inner inclined surface 62b is made of a hooked path, the inner portion of the upper-cowl 62 forms a recess 62d set back inward in the widthwise direction of the vehicle boy.

As shown in Fig. 5, the upper-cowl 62 is sectionally mountain-shaped with the inner inclined surface 62b opposed to the middle-cowls 63 in parallel with an upper edge thereof, so that the upper wind discharge port 72 is seen opened even in side elevation more greatly than the same port seen from a diagonally upper position. Therefore, a radiation-passed wind diagonally upward passes through the upper wind discharged port 72.

As shown in Fig. 4 and Fig. 5, the inclined surface 62b and recess 62d of the upper-cowl 62 continue to the recesses 57 in both side surfaces of the front cowl upper 51. Therefore, a vent passage 73 positioned above the upper wind discharge port 72 and adapted to pass the travel wind therethrough from the front side to the rear side is formed. This vent passage 73 is formed at a front end side portion by the recess 57, and at a rear end side portion by the extension 73E made longer in the longitudinal direction of the vehicle to a position just above the upper wind discharge port 72. This extension 73E is formed by combining panel type middle-cowls 63 with the outer portions of the inclined surface 62b and recess 62d of the upper-cowl 62 with a space kept between the two cowls. At a rear end of the extension 73E, induction passages 73F for inducing the wind, which flows from the vent passages 73 backward, in the outward direction is provided.

This induction passage 73F is formed by the downwardly sloping inclined surface 62b and ridge portion 62a of each sub-cowl (upper-cowl) 62, and extends in a horizontal section divergently in the rearward direction with the width of the induction passages increasing in the lateral direction of the vehicle. Since the travel wind enters the recesses 57 forcibly, the travel wind flows along the vent passage 73 linearly from the front side to the rear side. Therefore, the travel wind necessarily spreads outward in the widthwise direction of the vehicle and flows rearward as the travel wind is induced by the induction passage 73F formed by the inclined surfaces 62b of the sub-cowl (upper cowl) 62.

Since the upper edges 63a of the side covers 63 are fixed to upper side of the recesses 57 in a projecting manner, the cross section of the corresponding portions of the vent passage 73 has a shape close to a substantially C-shape. Therefore, the travel wind is taken in easily, and the travel wind taken in is easily led to the rear side without making the same wind escape outside. The middle-cowls 63 are fixed to the under-cowl 61 by screws. Since the vent passages 73 can be formed by only combining the middle-cowls 63 in this manner with the upper-cowl 62 from the outer side so as to cover the lower portion of the upper-cowl 62, the forming of the vent passage 73 can be done with ease.

As shown in Fig. 1, Fig. 2 and Fig. 7, the outside air induction ducts 80 are provided on the inner side of the under-cowl 61 and middle-cowls 63 so that the front end port is opened the positions in which the travel wind is introduced with the rear port opened toward a space surrounded by the main frame 22, the engine 3 and the fuel tank 7. At the back of the space, wind discharge passages (drawing is omitted) for further blowing the wind, which is introduced thereinto, toward the rear side is secured. These wind discharge passages are secured between the rear frame 11 connected to the rear end of the body frame 20 and swing arms 12 connected to the rear end of the body frame in a position, which is lower than the connected portion of the rear frame 11, via the pivot 10 so that the swing arms 12 are swung in the vertical direction freely.

The under-cowl 61 of the front cowl lower 52 is provided in the side walls thereof with travel wind intake ports 67 communicating with the front end of the outside air induction duct 80. The travel wind intake ports 67 are provided in positions lower than the lower end of the radiator 4, and, in the side walls of the front cowl lower 52 on the upper side of the travel wind intake ports 67, lower side wind discharge ports 71 for the radiator-passed wind are secured.

The operation of the motorcycle will now be described.

A part of the wind passed through the radiator 4 during the traveling of the vehicle flows out upward or rearward from the upper wind discharge ports 72 provided in side walls of the front cowl 50. As a flow of the travel wind shown by arrows F in Fig. 1 to Fig. 5, the travel wind F flows straight at a high speed in the vent passage 73, which is positioned above the wind discharge port 72, from the front end thereof in the rearward direction. Owing to a pressure difference occurring due to the high-speed air current, the radiator-passed hot air-containing wind is positively discharged from the upper wind discharge port 72 to the outside. Therefore, the heat in the front cowl 50 can be discharged efficiently to the outside.

Moreover, since the vent passage 73 extends in the longitudinal direction of the vehicle up to a position just above the upper wind discharge port 72, the hot air passed through the radiator 4 can be made to flow smoothly in the rearward direction. Since the induction passages 73F for inducing the wind flowing rearward in the vent passages 73 outward is provided on the rear ends of the extensions 73E of the vent passages 73, the hot wind from the radiator 4 can be induced outward in positions in front of the legs of the driver, and thus, the hot wind can be prevented from hitting on the legs of the driver. Accordingly, the unpleasant feeling occurring due to the hot air hitting on the driver's legs, especially, in summer is eliminated.

In this motorcycle, two vertically spaced ports (lower wind discharge port 71 and upper wind discharge port 72) for discharging the radiator-passed wind are provided. Therefore, even when a cooling operation is carried out by only an operation of the radiator fan 14A, the hot air can be discharged smoothly.

Since the vent passages 73 mentioned above are formed with the positions shunning the headlamp 54 and radiator 4, a vacant space can be effectively utilized.

The description above discloses (amongst others) an embodiment of a motorcycle provided with a body frame, an engine supported on the body frame, a radiator provided ahead of the engine, a front cowl provided so as to cover a front surface of the body and side regions of a front portion thereof including the radiator, and discharge ports opened in the portions of side walls of the front cowl which are behind the radiator, and adapted to discharge the wind passed through the radiator, wherein side walls of a front end of the portions of the front cowl which are above the discharge ports, which are formed in the side walls of the front cowl, for the wind passed through the radiator are provided with vent passages for introducing travel wind from the front end and making the travel wind flow rearward.

According to this preferred embodiment, the hot wind passed through the radiator is discharged from the discharge ports provided in the side walls of the front cowl to the outside. While the vehicle travels, the travel wind flows through the vent passages, which are positioned above the wind discharge ports, from the front side to the rear side. Owing to the difference in pressure occurring due to the air flow, the radiator-passed wind including hot air is positively discharged from the wind discharge port to the outside. Therefore, the heat in the front cowl can be discharged efficiently to the outside.

Further, preferably the vent passages are provided with extension portions extended longitudinally up to positions immediately above the ports for discharging the wind passed through the radiator.

In this embodiment, the vent passages are extended up to positions immediately above the port for discharging the wind passed through the radiator, so that the radiator-passed wind can be made to flow rearward. This enables the heat in the front cowl to be discharged to the outside more efficiently.

Still further, preferably an upper-cowl is fixed to the body frame, the extension portions of the vent passages being formed on the upper-cowl.

According to this embodiment, an upper-cowl is fixed to the body frame, and the extension portions of the vent passages are formed on the upper-cowl, so that the forming of the vent passages becomes easier.

Yet further, preferably induction passages for inducing the wind, which flows from the vent passages, in the outward direction is provided in a rear end region of the extension portions of the vent passages.

According to this embodiment, the vent passages are provided at rear ends of the extensions with induction passages for inducing the wind flowing rearward in the vent passages, so that the hot air from the radiator does not hit on the driver's legs.

Still further, preferably the induction passages are inclined in the rearward downward direction.

According to this embodiment, the wind flowing in the vent passages can be made to flow rearward and downward, so that the hot wind from the radiator does not hit on the driver's legs.

Still further, preferably the upper-cowl is provided with recesses extending inward in the direction of the width of the body, the vent passages being formed between the recesses and panel type middle-cowl fixed to the upper-cowl so that the middle-cowl covers the outer side of the upper-cowl.

According to this embodiment, the panel type middle-cowl is combined from the outside with the upper-cowl so that the recesses formed in the upper-cowl are covered with the middle-cowl, and the vent passages are formed between these cowls. This enables the vent passages to be formed easily.

According to another embodiment, the middle-cowl extends in the longitudinal direction so as to vertically divide the discharge ports for the wind passed through the radiator, the discharge ports being formed above the middle-cowl and including upper wind discharge ports formed above the middle-cowl and adapted to discharge the wind passed through an upper portion of the radiator, and lower wind discharge ports formed below the middle-cowl and adapted to discharge the wind passed through a lower portion of the radiator.

According to this embodiment, two wind discharge ports, i.e. upper and lower wind discharge ports for discharging the wind passing through the radiator are provided. Therefore, even in a case where a cooling operation is carried out only by a radiator fan when the vehicle is stopped, the hot air can be discharged to the outside smoothly.

Beneficially, an under-cowl is provided which is fixed to the body frame and adapted to cover the engine from a lower portion thereof to side portions thereof, the middle-cowl being fixed between the upper-cowl and under-cowl, the wind discharge ports at the upper side of the middle-cowl being used as upper air discharge ports, the wind discharge ports at the lower side of the middle-cowl being used as lower air discharge ports.

Accordingly, the upper-cowl can be used both as vent passages and as the upper edges of the upper wind discharge ports.

Further, beneficially headlamps are provided on a front portion of the front cowl, the wind passages being provided between the headlamp and radiator.

Accordingly, the vent passages can be formed with the positions shunning the headlamps and radiator. This enables a vacant space to be effectively utilized.

The description above discloses, as a particularly preferred embodiment, for the improving of the efficiency of discharging the radiator-passed wind to the outside of a vehicle, a motorcycle having an engine supported on a body frame 20, a radiator 4 provided ahead of the engine, a front cowl 50 provided so as to cover from a front surface of the vehicle body to side surfaces of the front portion thereof including the radiator, and wind discharge ports 72 opened in side walls of the portions of the front cowl which are on the rear side of the radiator, and adapted to discharge the radiator-passed wind to the outside, wherein vent passages 73 are provided in the portions of the side walls of the front end of the front cowl which are above the wind discharge ports, the vent passages 73 being adapted to introduce the travel wind from the front end make the travel wind flow rearward, the vent passages 73 being provided at rear portions thereof with the extensions 73E made longer up to positions just above the wind discharge ports, and at rear ends of the extensions with the induction passages 73F for inducing the wind, which flows from the vent passages rearward, in the outward direction.

## Claims

1. Motorcycle comprising an engine (3) and a radiator (4) arranged ahead of the engine (3), wherein radiator-passed air is discharged from wind discharge ports (72) provided in side walls of a front cowl (50) covering a front of the motorcycle, wherein
vent passages (73) are formed in the front cowl (50),
**characterized in that** said vent passage (73) is formed at a front end side portion by a recess (57) on the front cowl and extends in a longitudinal direction of the motorcycle to a position above the wind discharge port (72) and is adapted to introduce travel air into the radiator-passed air discharged from said wind discharge ports (72) and to make the travel wind flow rearward.

2. Vehicle according to claim 1, further comprising a body frame (20), wherein the engine is supported on the body frame (20), the radiator (4) is provided ahead of the engine, the front cowl (50) is provided so as to cover a front surface of the body frame (20) and side regions of a front portion of the body frame (20) including the radiator (4) and the discharge ports (72) being formed in the side walls of the front cowl (50), are opened in the portion of side walls of the front cowl (50), which are behind the radiator (4) and adapted to discharge travel wind passed through the radiator (4), wherein side walls of a front end of the portions of the front cowl (50), which are arranged above the discharge ports (72) for the travel wind passed through the radiator (4) are provided with the vent passages (73) for introducing the travel wind from the front end and for making the travel wind flow rearward.

3. Vehicle according to claim 1 or 2, wherein the vent passages (73) are provided with extensions (73E) made longer longitudinally up to positions immediately above the discharge ports (72) for discharging the travel wind passed through the radiator (4).

4. Vehicle according to claim 3, wherein an upper-cowl (62) is fixed to the body frame (20), the extensions (73E) of the vent passages (73) being formed on the upper-cowl (62).

5. Vehicle according to claim 3 or 4, wherein induction passages (73F) for inducing the travel wind, which rearwardly flows from the vent passages (73), in the outward direction are provided in rear end regions of the extensions (73E) of the vent passages (73).

6. Vehicle according to claim 5, wherein the induction passages (73F) are inclined in the rearward downward direction.

7. Vehicle according to one of claims 4 to 6, wherein the upper-cowl (62) is provided with recesses (57) extending inward in the direction of the width of the body frame (20), the vent passages (73) being formed between the recesses (57) and a panel-type middle-cowl (63) fixed to the upper-cowl (62) so that the middle-cowl (63) covers the outer side of the upper cowl (62).

8. Vehicle according to claim 7, wherein the middle-cowl (63) extends in the longitudinal direction so as to vertically divide the discharge ports (71,72) for the travel wind passed through the radiator (14), the discharge ports (71,72) being formed above the middle-cowl (63) and including lower wind discharge ports (71) formed above the middle-cowls (63) and adapted to discharge the travel wind passed through an upper portion of the radiator (4U), and lower wind discharge ports (71) formed below the middle-cowl (63) and adapted to discharge the travel wind passed through a lower portion (4D) of the radiator (4).

9. Vehicle according to claim 8, wherein an under-cowl (61) is provided, which is fixed to the body frame (20) and is adapted to cover the engine (3) from a lower portion thereof to side portions thereof, the middle-cowl (63) being fixed between the upper-cowl (62) and under-cowl (61), the wind discharge ports at the upper side of the middle-cowl being used as upper air discharge ports (72), and the wind discharge ports at the lower side of the middle-cowl being used as lower air discharge ports (71).

10. Vehicle according to one of claims 1 to 9, wherein a headlamp (54) is provided on a front portion of the front cowl (50), the travel wind passages being provided between the headlamp (54) and the radiator (4).

## Patentansprüche

1. Motorrad, das einen Motor (3) und einen Kühler (4) umfasst, der vor dem Motor (3) angeordnet ist, wobei durch den Kühler geleitete Luft über Luft-Ableitöffnungen (72) abgeleitet wird, die in Seitenwänden einer Vorderverkleidung (50) vorhanden sind, die eine Vorderseite des Motorrades abdeckt, wobei
Lüftungskanäle (73) in der Vorderverkleidung (50) ausgebildet sind,
**dadurch gekennzeichnet, dass**
der Lüftungskanal (73) an einem vorderen Seitenabschnitt am vorderen Ende über eine Aussparung (57) an der Vorderverkleidung ausgebildet ist und in einer Längsrichtung des Motorrades bis zu einer Position oberhalb der Wind-Ableitöffnungen (72) verläuft und so eingerichtet ist, dass Fahrtwind in die durch den Kühler geleitete Luft eingeleitet wird, die über die Luft-Ableitöffnungen (72) abgeleitet wird, und er den Fahrtwindstrom nach hinten strömen lässt.

2. Fahrzeug nach Anspruch 1, das des Weiteren einen Karosserierahmen (20) umfasst, wobei der Motor von dem Karosserierahmen (20) getragen wird, der Kühler (4) vor dem Motor vorhanden ist, die Vorderverkleidung (50) so vorhanden ist, dass sie eine vordere Fläche des Karosserierahmens (20) und seitliche Bereiche eines vorderen Abschnitts des Karosserierahmens (20) einschließlich des Kühlers (4) abdeckt und die Ableitöffnungen (72), die in den Seitenwänden der Vorderverkleidung (50) ausgebildet sind, sich in dem Abschnitt von Seitenwänden der Vorderverkleidung (50) öffnen, die sich hinter dem Kühler (4) befinden, und so eingerichtet sind, dass sie durch den Kühler (4) geleiteten Fahrtwind ableiten, wobei Seitenwände eines vorderen Endes der Abschnitte der Vorderverkleidung (50), die über den Ableitöffnungen (72) für den durch den Kühler (4) geleiteten Fahrtwind angeordnet sind, mit den Lüftungskanälen (73) versehen sind, die dazu dienen, den Fahrtwind über das vordere Ende einzuleiten und den Fahrtwind nach hinten strömen zu lassen.

3. Fahrzeug nach Anspruch 1 oder 2, wobei die Lüftungskanäle (73) mit Verlängerungen (73E) versehen sind, die in Längsrichtung bis zu Positionen unmittelbar oberhalb der Ableitöffnungen (72) zum Ableiten von durch den Kühler (4) geleitetem Fahrtwind verlängert sind.

4. Fahrzeug nach Anspruch 3, wobei eine Oberverkleidung (62) an dem Karosserierahmen (20) befestigt ist und die Verlängerungen (73E) der Lüftungskanäle (73) an der Oberverkleidung (62) ausgebildet sind.

5. Fahrzeug nach Anspruch 3 oder 4, wobei Ansaugkanäle (73F) zum Ansaugen des Fahrtwinds, der über die Lüftungskanäle (73) nach hinten strömt, in der Auswärtsrichtung in hinteren Endbereichen der Verlängerungen (73E) der Lüftungskanäle (73) vorhanden sind.

6. Fahrzeug nach Anspruch 5, wobei die Ansaugkanäle (73F) in der Richtung nach hinten unten geneigt sind.

7. Fahrzeug nach einem der Ansprüche 4 bis 6, wobei die Oberverkleidung (62) mit Vertiefungen (57) versehen ist, die sich in der Richtung der Breite des Karosserierahmens (20) nach innen erstrecken, und die Lüftungskanäle (73) zwischen den Vertiefungen (57) und einer plattenartigen Mittelverkleidung (63) ausgebildet sind, die an der Oberverkleidung (62) so befestigt ist, dass die Mittelverkleidung (63) die Außenseite der Oberverkleidung (62) abdeckt.

8. Fahrzeug nach Anspruch 7, wobei sich die Mittelverkleidung (63) so in der Längsrichtung erstreckt, dass die Ableitöffnungen (71, 72) für den durch den Kühler (14) geleiteten Fahrtwind vertikal geteilt werden, wobei die Ableitöffnungen (71, 72) oberhalb der Mittelverkleidungen (63) ausgebildet sind und untere Wind-Ableitöffnungen (71), die oberhalb der Mittelverkleidung (63) ausgebildet und so eingerichtet sind, dass sie den durch einen oberen Abschnitt des Kühlers (4U) geleiteten Wind ableiten, sowie untere Wind-Ableitöffnungen (71) enthalten, die unterhalb der Mittelverkleidung (63) ausgebildet und so eingerichtet sind, dass sie durch einen unteren Abschnitt (4D) des Kühlers (4) geleiteten Fahrtwind ableiten.

9. Fahrzeug nach Anspruch 8, wobei eine Unterverkleidung (61) vorhanden ist, die an dem Karosserierahmen (20) befestigt und so eingerichtet ist, dass sie den Motor (3) von einem unteren Abschnitt desselben her bis zu Seitenabschnitten desselben abdeckt, die Mittelverkleidung (63) zwischen der Oberverkleidung (62) und der Unterverkleidung (61) befestigt ist, die Wind-Ableitöffnungen an der oberen Seite der Mittelverkleidung als obere Luft-Ableitöffnungen (72) dienen und die Wind-Ableitöffnungen an der unteren Seite der Mittelverkleidung als untere Luft-Ableitöffnungen (71) dienen.

10. Fahrzeug nach einem der Ansprüche 1 bis 9, wobei ein Scheinwerfer (54) an einem vorderen Abschnitt der Vorderverkleidung (50) vorhanden ist und die Fahrtwindkanäle zwischen dem Scheinwerfer (54) und dem Kühler (4) vorhanden sind.

## Revendications

1. Motocycle comprenant un moteur (3) et un radiateur (4) disposé à l'avant du moteur (3), étant précisé que de l'air qui est passé par le radiateur sort par des orifices de sortie d'air (72) disposés dans des parois latérales d'un capot avant (50) qui couvre l'avant du motocycle,
étant précisé que des passages d'évacuation d'air (73) sont formés dans le capot avant (50),
**caractérisé en ce que** le passage d'évacuation d'air (73) est formé sur une partie latérale d'extrémité avant par une cavité (57) située sur le capot avant, s'étend dans un sens longitudinal du motocycle jusqu'à un endroit situé au-dessus de l'orifice de sortie d'air (72), et est apte à introduire de l'air de déplacement dans l'air qui a traversé le radiateur et qui sort par les orifices de sortie d'air (72), et à faire s'écouler vers l'arrière cet air de déplacement.

2. Véhicule selon la revendication 1, comprenant également un cadre (20), étant précisé que le moteur est supporté sur le cadre (20), que le radiateur (4) est disposé à l'avant du moteur, que le capot avant (50) est disposé de manière à couvrir une surface avant du cadre (20), et que des zones latérales d'une partie avant du cadre (20) comprenant le radiateur (4) et les orifices de sortie (72) formés dans des parois latérales d'un capot avant (50) sont ouvertes dans la partie desdites parois latérales du capot avant (50) qui se trouvent derrière le radiateur (4) et sont aptes à faire sortir l'air de déplacement qui a traversé le radiateur (4), étant précisé que les parois latérales d'une extrémité avant des parties du capot avant (50) qui sont disposées au-dessus des orifices de sortie (72) pour l'air de déplacement qui a traversé la radiateur (4) sont pourvues des passages d'évacuation d'air (73) pour introduire l'air de déplacement à partir de l'extrémité avant et pour faire s'écouler celui-ci vers l'arrière.

3. Véhicule selon la revendication 1 ou 2, étant précisé que les passages d'évacuation d'air (73) sont pourvus de prolongements (73E) qui sont plus longs longitudinalement jusqu'à des endroits situés juste au-dessus des orifices de sortie (72) pour la sortie de l'air de déplacement qui a traversé le radiateur (4).

4. Véhicule selon la revendication 3, étant précisé qu'un capot supérieur (62) est fixé au cadre (20), les prolongements (73E) des passages d'évacuation d'air (73) étant formés sur le capot supérieur (62).

5. Véhicule selon la revendication 3 ou 4, étant précisé que des passages d'admission (73F) pour l'admission de l'air de déplacement qui s'écoule vers l'arrière à partir des passages d'évacuation d'air (73), vers l'extérieur, sont disposés dans des zones d'extrémité arrière des prolongements (73E) des passages d'évacuation d'air (73).

6. Véhicule selon la revendication 5, étant précisé que les passages d'admission (73F) sont inclinés vers l'arrière et vers le bas.

7. Véhicule selon l'une des revendications 4 à 6, étant précisé que le capot supérieur (62) est pourvu de cavités (57) qui s'étendent vers l'intérieur, dans le sens de la largeur du cadre (20), les passages d'évacuation d'air (73) étant formés entre les cavités (57) et un capot central du type à panneau (63) fixé au capot supérieur (62) de sorte que le capot central (63) couvre le côté extérieur du capot supérieur (62).

8. Véhicule selon la revendication 7, étant précisé que le capot central (63) s'étend dans le sens longitudinal de manière à diviser verticalement les orifices de sortie (71, 72) pour l'air de déplacement qui a traversé le radiateur (14), les orifices de sortie (71, 72) étant formés au-dessus du capot central (63) et comprenant des orifices de sortie d'air inférieurs (71) formés au-dessus des capot centraux (63) et aptes à faire sortir l'air de déplacement qui a traversé une partie supérieure du radiateur (4U), et des orifices de sortie d'air inférieurs (71) formés au-dessous du capot central (63) et aptes à faire sortir l'air de déplacement qui a traversé une partie inférieure (4D) du radiateur (4).

9. Véhicule selon la revendication 8, étant précisé qu'il est prévu un capot inférieur (61) qui est fixé au cadre (20) et qui est apte à couvrir le moteur (3), d'une partie inférieure jusqu'à des parties latérales de celui-ci, le capot central (63) étant fixé entre le capot supérieur (62) et le capot inférieur (61), les orifices de sortie d'air sur le côté supérieur du capot central étant utilisés comme orifices de sortie d'air supérieurs (72), et les orifices de sortie d'air sur le côté inférieur du capot central étant utilisés comme orifices de sortie d'air inférieurs (71).

10. Véhicule selon l'une des revendications 1 à 9, étant précisé qu'un feu avant (54) est disposé sur une partie avant du capot avant (50), les passages d'air de déplacement étant disposés entre le feu avant (54) et le radiateur (4).
